# EUROPEAN PATENT APPLICATION

(11) **EP 2 309 795 A1**
(43) Date of publication of application: **13.04.2011**
(21) Application number: 09290775.7
(22) Date of filing: 12.10.2009
(51) Int. Cl.: H04W 28/26, H04W 36/08

(54) **Method and apparatus for handover management in a wireless communications network**

(71) Applicant: Alcatel Lucent, 75008 Paris (FR)
(72) Inventor: Grob-Lipski, Heidrun, 72181 Starzach (DE)
(74) Representative: Cockayne, Gillian

(57) **Abstract**

A method for multiple preparation of target cells in a wireless communication network, for handover of a mobile terminal from a source cell to a target cell, includes providing a list of candidate target cells that meet given conditions (weak signal strength in uplink or downlink between mobile terminal and serving base station) and eventually statistics for their inclusion. At least some of the cells on the list are prepared for handover, while a cell included in the list that no longer meets the conditions is removed from it. Preparation of a cell for handover may be triggered when it is added to the list, or the signal strength between the source cell and the mobile terminal reduces below a threshold value, in uplink or in downlink. The handover preparation and the handover cancel procedures between eNodeBs as specified in LTE are used for this purpose.

## Description

### FIELD OF THE INVENTION

The present invention relates to a method and apparatus for handover management in a wireless communications network, and more particularly, but not exclusively, to a method and apparatus implemented in accordance with the 3rd Generation Partnership Project (3GPP) evolved Universal Terrestrial Radio Access Network (E-UTRAN) and evolved Universal Terrestrial Radio Acces (E-UTRA) specification, also referred to as Long Term Evolution (LTE).

### BACKGROUND

Currently, 3GPP is considering development of E-UTRA and E-UTRAN as set out in the technical specification 3GPP TS 36.300 v 9.1.0 (September 2009), incorporated herein by way of reference, and related documents. 3GPP Long Tcrm Evolution (LTE) aims to enhance the Universal Mobile Telecommunications System (UMTS) standard, for example, by improving efficiency and services. In a cellular network comprising a plurality of base stations, each base station has one or more associated cells. A mobile terminal in communication with a source cell may need to handover to a new target cell to maintain connectivity. In a handover procedure, such as, for example, when a mobile terminal moves from the coverage area of one cell to that of another, a new connection to the target cell is set up and the connection to the old cell may then be released.

In E-UTRAN, user equipment (UE) communicates with a network node, NodeB (eNB), with data being sent on radio bearers (RBs) over a radio link between them, The eNB interfaces with a Mobile Management Entity (MME) via an interface designated as S1. The E-UTRAN network includes a plurality of eNBs and MMEs and the UE may be handed over from one eNB to another to achieve optimum performance, for example under fading channel conditions or where the UE is moving from one cell coverage area to another. Neighboring eNBs may communicate with one another over the X2 interface between them. The connection between the UE and the source eNB to which it is attached may be lost, this being known as radio link failure (RLF).

### BRIEF SUMMARY

According to a first aspect of the invention, a method for handover management in a wireless communications network for handover of a mobile terminal from a source cell to a target cell, includes providing a list of candidate target cells where cells included on the list meet given conditions for inclusion. At least some of the cells on the list are prepared for handover and, when a cell included in the list no longer meets the conditions for being included in the list, it is removed from the list.

The given conditions may include each cell on the list having a received signal strength at the mobile terminal that exceeds a threshold level. The list may be modified depending on signal strength received by the mobile terminal. Additionally, or alternatively, in another method, the given conditions may be base on statistics, for example, cells may be added to the list if they have been preferably chosen recently for handover from source to target cell.

At least some of the cells on the list are prepared for handover and, when a cell is removed from the list, its preparation is cancelled. Preparation of a target cell may include, for example, reserving resources at the target cell, transmitting the context of the mobile terminal to the target cell or other procedures used in achieving handover of a mobile terminal to the target cell if it is chosen, so as to ready it for handover. Thus, if handover is necessary, delays maybe reduced compared to handover to an unprepared cell. This may be particularly valuable where RLF occurs.

Tn one method, all the target cells included in the list are prepared for handover. In another method, for example, a subset of the cells included in the list may be prepared, for example, those more likely to be handed over to because they have greater signal strength or because of geographical coverage.

In one method, preparation of a cell for handover is triggered when it is added to the list. This may be considered 'instant' or 'immediate' preparation, although there will be some delay in completing the preparation phase as the require messaging to implement this is carried out.

In one method, preparation of a cell for handover is triggered when the signal strength received by the source cell from the mobile terminal reduces below a threshold value. In another method, handover preparation is triggered of the downlink signal strength received by the mobile terminal from the source cell reduces below a threshold value. This may detected at the source cell by monitoring signal strength reports from the mobile terminal, for example, a radio resource control (RRC) measurement report in an LTE network. These approaches may be considered to be 'conditional' preparation. They may be used in combination or only one may be implemented in a particular embodiment. By using conditional preparation, when it is detected that handover is likely, at least some of the cells in the list are prepared for handover. This reduces the risk of the mobile terminal experiencing RLF prior to handover.

The invention is particularly applicable to communication networks in accordance with LTE but it may advantageously be used in networks complying with other specifications or standards. Where the network is an LTE network, a cell is also termed an eNode B or eNB.

In one method, a network node supporting the source cell controls addition and removal of a cell from the list.

According to a second aspect of the invention, a network node for a, wireless communications network comprises: a data store providing a list of candidate target cells for handover of a mobile terminal from a source cell to a target cell, where each target cell on the list has a received signal strength at the mobile terminal that exceeds a threshold level. The network nodc also comprises a comparator for comparing a received signal strength at the mobile terminal from a cell with the threshold level and using the result of the comparison to determine when the cell is included in the list; and a transmitter arranged to transmit a message to a cell on the list to prepare for handover and arranged to transmit a message cancelling preparation of a prepared cell when it is removed from the list. The node may be an eNodeB in an LTE network, for example.

### BRIEF DESCRIPTION OF THE DRAWINGS

Some embodiments of the present invention are now described by way of example only, and with reference to the accompanying drawings, in which:
Figure 1 schematically illustrates managing a candidate target cell list in accordance with the invention;
Figure 2 schematically illustrates a network arranged to implement instant preparation of target cells; and
Figure 3 schematically illustrates a network arranged to implement conditional preparation of target cells.

### DETAILED DESCRIPTION

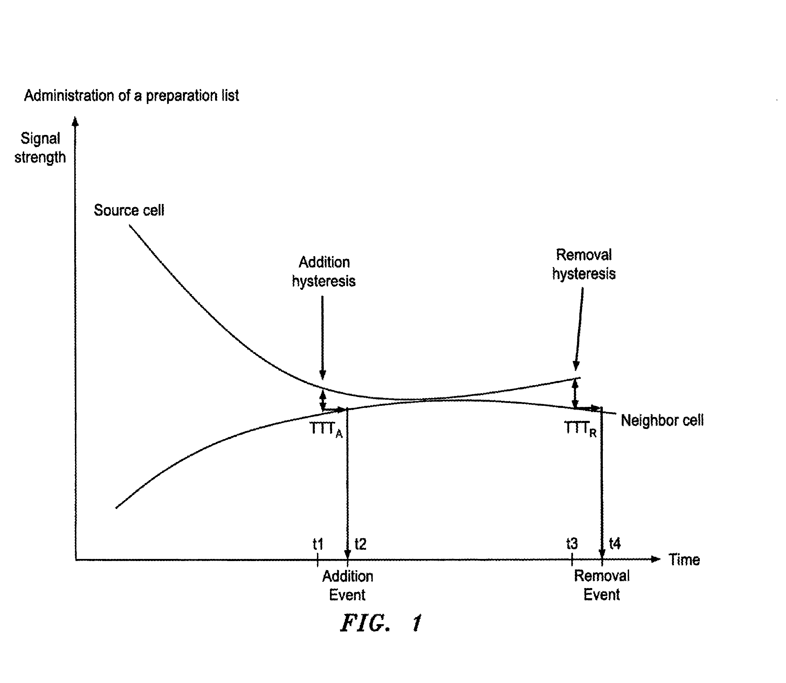

With reference to Figure 1, in an LTE communications network, measurement reports from a mobile terminal UE give information concerning the strength of signal it receives from the source cell to which it is attached, this being shown as the top curve in Figure 1. This varies with time as conditions change, for example, where the mobile terminal is moving or where radio conditions change. Figure 1 also shows measurements taken by the mobile terminal UE of a signal received from a neighboring cell, this being illustrated in the lower curve, which is less strong than the source cell signal. The mobile terminal UE takes measurements during a scanning phase of its operation and reports them to the source cell.

When the signal strength of the neighbor cell exceeds a threshold level at time t1, it is detected at the source cell and accordingly the neighbor cell is added to a list of candidate target cells, the addition event occurring at time t2. The mobile terminal UE continues to take measurements during its scanning phases. At time t3, a comparison of the neighbor cell signal strength and the threshold leve shows that the signal strength is now below the required strength for the neighbor cell to be included in the list. Accordingly, the neighbor cell is removed at a removal event at time t4. Figure 1 is illustrative of the procedure for one neighbor cell but typically, although not necessarily, a plurality of neighbor cells are measured at the mobile terminal and their signal strengths compared with the threshold level to generate a list having a plurality of candidate target cells. The list is updated over time to take into account signal strength changes.

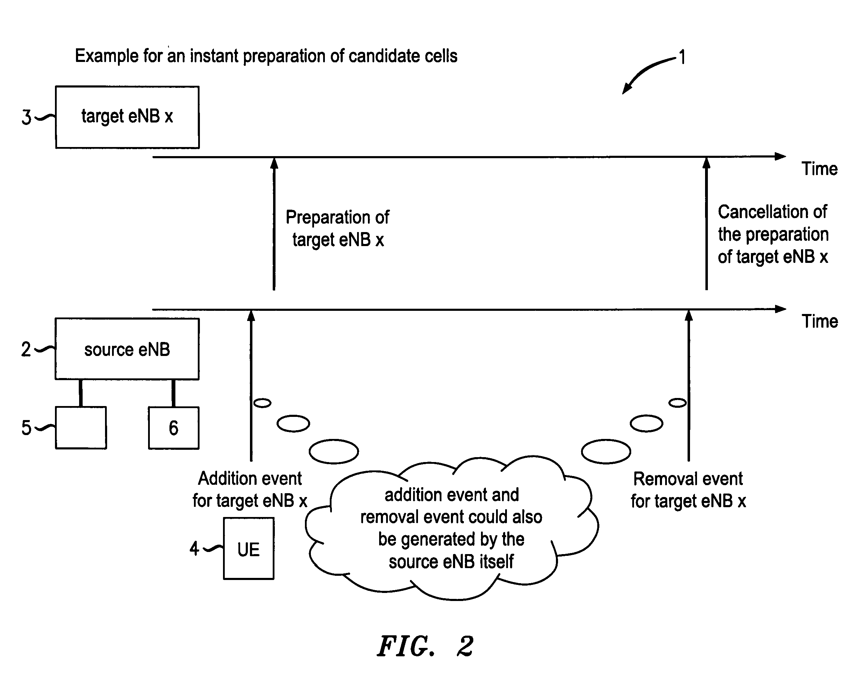

With reference to Figure 2, an LTE network 1 is schematically shown and includes a source eNB 2 and a target eNB 3. A UE 4 is in communications with the source eNB 2. At intervals, the UE 4 sends measurement reports to source eNB 2. A comparator 5 at the source cNB 2 compares the signal strength from target cNB 3 against a threshold level. When this is exceeded, the target eNB 3 is added to a preparation list held in a data store 6 at the source eNB 2 if it is not cady included. Including the target eNB 3 in the list is an addition event. A transmitter at the source eNB messages the target eNB 3 to trigger its preparation for handover. The messaging may include a request to reserve radio resources for the UE 4 and transmit context information for the UE 4.

At a later time, the signal strength from the target eNB 3 is determined by the comparator 5 to have fallen beneath the threshold level. It is removed from the list at data store 6 and the source eNB 2 messages the target eNB 3 to request it to cancel its preparation for handover.

Each addition of a target eNB results in it being prepared for handover and handover preparation is cancelled if it is removed from the list.

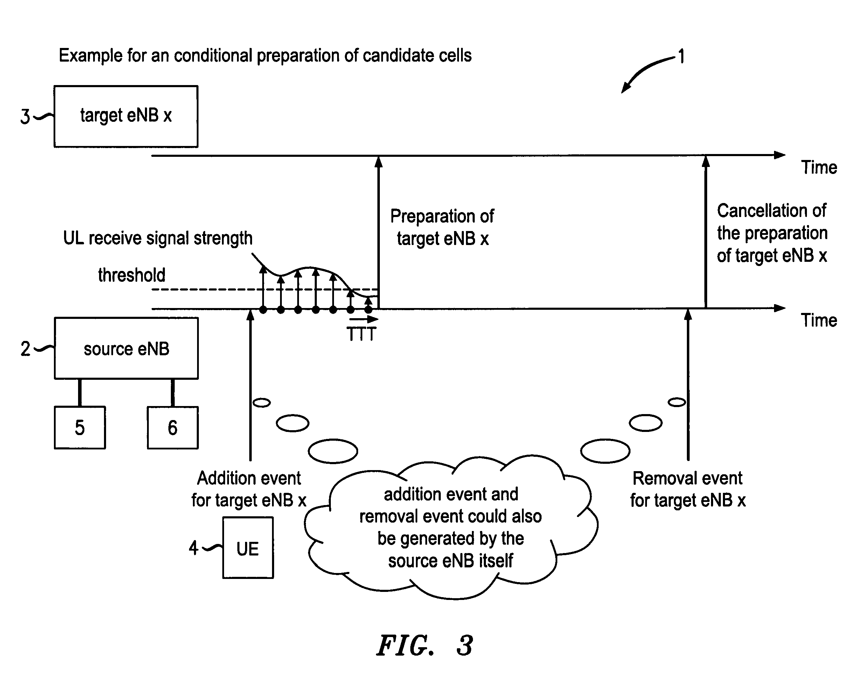

With reference to Figure 3, where similar reference signs are used for similar items, in an LTE network, addition and removal of target cells from a preparation list held at data store 6 are handled in the same manner as set out with reference to Figure 2. However, in this embodiment, the addition of the target eNB 3 to the list does not trigger its preparation. Instead, the source cell eNB 2 monitors the strength of the signal it receives from the UE 4 in the uplink direction, When the uplink signal falls below a threshold value, indicated by the broken line in Figure 3, this triggers handover preparation of each of the target eNBs 3 included in the list. If the signal in the uplink then later rises again above the threshold level, the preparation of the target eNBs is canceled, releasing the reserved resources.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A method for handover management in a wireless communications network for handover of a mobile terminal from a source cell to a target cell, including the steps of:
providing a list of candidate target cells where cells included on th list meet given conditions for inclusion;
preparing at least some of the cells on the list for handover;
and, when a cell included in the list no longer meets the conditions for being included in the list, removing it from the list.

2. The method as claimed in claim 1 and wherein all the target culls included in the list are prepared for handover.

3. The method as claimed in claim 1 or 2 and including triggering preparation of a cell for handover when it is added to the list.

4. The method as claimed in claim 1 or 2 and including triggering preparation of a cell for handover when the signal strength received by the source cell from the mobile terminal reduces below a threshold value.

5. The method as claimed in claim 1, 2 or 4 and including triggering preparation of a cell for handover when the signal strength received by the mobile terminal from the source cell reduces below a threshold value.

6. The method as claimed in any preceding claim and wherein said given conditions for inclusion comprise a cell having a received signal strength at the mobile terminal that exceeds a threshold level; and including modifying the list depending on signal strength received by the mobile terminal from a cell included on the list.

7. The method as claimed in any preceding claim and wherein said given conditions for inclusion comprise conditions based on statistics.

8. The method as claimed in any preceding claim and wherein the network is in accordance with Long Term Evolution (LTE) specifications.

9. The method as claimed in any preceding claim and wherein a network node supporting the source cell controls addition and removal of a cell from the list.

10. A network node for a wireless communications network comprising: a data store providing a list of candidate target cells for handover of a mobile terminal from a source cell to a target cell, providing a list of candidate target cells where cells included on the list meet given conditions for inclusion; a comparator or comparing a cell characteristic with the given conditions and using the result of the comparison to determine when the cell is included in the list or removed from the list; and a transmitter arranged to transmit a message to a cell on the list to prepare for handover and arranged to transmit a message cancelling preparation of a prepared cell when it is removed from the list.

11. The network node as claimed in claim 10 and wherein all the target cells included in the list are prepared for handover.

12. The network node as claimed in claim 10 or 11 and including triggering preparation of a cell for handover when it is added to the list.

13. The network node as claimed in claim 10 or 11 and including triggering preparation of a cell for handover when the signal strength received by the source cell from the mobile terminal reduces below a threshold value.

14. The network node as claimed in claim 10, 11 or 13 and including triggering preparation of a cell for handover when the signal strength received by the mobile from the source cell reduces below a threshold value.

15. The network node as claimed in any of claims 10 to 14 and wherein said given conditions for inclusion comprise a cell having a received signal strength at the mobile terminal that exceeds a threshold level; and including modifying the list depending on signal strength received by the mobile terminal from a cell included on the list.

16. The network node as claimed in any of claims 10 to 15 and wherein the network is in accordance with Long Term Evolution (LTE) specifications.

17. The network node as claimed in claim 16 and wherein the node is an eNodeB.
